# DEMANDE DE BREVET EUROPEEN

(11) **EP 3 945 626 A1**
(43) Date de publication de la demande: **02.02.2022**
(21) Numéro de dépôt: 21185421.1
(22) Date de dépôt: 13.07.2021
(51) Int. Cl.: H01M 50/107, H01M 50/131, H01M 50/342

(54) **DISPOSITIF ADAPTABLE SUR UNE CELLULE POUR CRÉER UNE AMORCE DE RUPTURE SUR UNE PAROI D'UN GODET D'UNE CELLULE ÉLECTROCHIMIQUE**

(30) Priorité: 30.07.2020 FR 2008063
(71) Demandeur: Commissariat à l'énergie atomique et aux énergies alternatives, 75015 Paris (FR)
(72) Inventeur: TESSARD, Romain, 38054 GRENOBLE cedex 09 (FR); DUMENIL, Sebastien, 38054 GRENOBLE Cedex 09 (FR)
(74) Mandataire: INNOV-GROUP

(57) **Abrégé**

L'invention concerne un dispositif adaptable sur une cellule (1) électrochimique pour créer une amorce de rupture sur une paroi d'un godet (10) de ladite cellule (1), ledit dispositif comportant des moyens de fixation à ladite cellule, un organe saillant agencé pour creuser un sillon (17) sur la paroi de ladite cellule, ledit sillon étant destiné à former ladite amorce de rupture.

## Description

### Domaine technique de l'invention

La présente invention se rapporte à un dispositif adaptable sur une cellule électrochimique pour créer une amorce de rupture sur une paroi d'un godet de ladite cellule.

### Etat de la technique

Actuellement, la cellule électrochimique au lithium la plus couramment utilisée est mieux connue sous la référence 18650. Une telle cellule est par exemple décrite dans le brevet US8323825B2**.** Récemment, des cellules à la norme 21700 ont également été proposées.

Ces cellules de type 18650, 21700 ou autres formats cylindriques comportent un conteneur, appelé godet, de forme cylindrique, dans lequel est placé un rouleau, également appelé bobinot, rassemblant les deux électrodes. Un électrolyte est ensuite injecté dans ledit godet. Le godet est fermé à son extrémité inférieure et ouvert à son extrémité supérieure, un capuchon étant apposé à cette extrémité supérieure pour le fermer de manière hermétique.

Une telle cellule au lithium est étanche et dispose généralement de dispositifs de protection portés par son capuchon afin d'empêcher son explosion dans des cas d'utilisations abusives (en température ou en charge). Ces dispositifs de protection sont notamment les suivants :
- Un dispositif d'interruption de courant (CiD - Pour *"Current Interrupt Device*") qui interrompt le courant en cas de surpression dans le godet, sans effet sur cette pression ;
- Un évent de surpression réalisé généralement sous la forme d'un disque de rupture qui permet de relâcher les gaz, afin d'empêcher une explosion ;
- Enfin le godet lui-même est généralement fragilisé afin de s'ouvrir dans des conditions optimales pour prévenir une explosion trop violente ;

L'évent de surpression est généralement réglé pour rompre à une valeur de 15 à 20 bars et est souvent situé du côté du pôle positif de la cellule. Sur les cellules de type 21700, pour améliorer la sécurité, certains fabricants ajoutent un évent de surpression supplémentaire du côté opposé à celui portant l'évent principal, c'est-à-dire sur le pôle négatif (publication : Darcy et al. - 2018 - "Design Guidelines for Safe High Performing Li-ion Batteries with 18650 cells")*.* Certaines architectures de cellules cylindriques, qui ne disposent pas d'évent sur le pôle positif, disposent cependant d'un évent sur le pôle négatif.

En cas de fort emballement thermique dans un système, il peut arriver que la cinétique des réactions provoque l'explosion de la cellule, malgré la présence de l'évent de surpression principal.

Pour certains usages, il serait donc souhaitable de pouvoir adapter ce type de cellule afin qu'elle soit en mesure de favoriser l'expulsion des gaz vers cet évent additionnel, en cas d'emballement thermique et ainsi éviter l'explosion de son godet.

Le but de l'invention est de proposer une solution permettant d'adapter la limite de rupture du godet et ainsi d'éviter l'explosion du godet en cas d'emballement thermique.

### Exposé de l'invention

Ce but est atteint par un dispositif adaptable sur une cellule électrochimique pour créer une amorce de rupture sur une paroi d'un godet de ladite cellule, ledit dispositif comportant des moyens de fixation à ladite cellule, un organe saillant agencé pour creuser un sillon sur la paroi de ladite cellule, ledit sillon étant destiné à former ladite amorce de rupture.

Selon une particularité, le dispositif se présente sous la forme d'un embout adaptable sur le godet de la cellule, ledit embout comportant un corps délimitant un volume interne comportant une empreinte formée pour coopérer avec une forme complémentaire de la cellule, ledit corps comprenant une paroi interne et une paroi externe.

Selon une autre particularité, le dispositif comporte des moyens de connexion électrique intégrés audit corps de l'embout, lesdits moyens de connexion électrique comportant une première partie fixée sur la paroi interne du corps et destinée à venir en contact avec un pôle électrique de ladite cellule et une deuxième partie fixée sur sa paroi externe et configurée pour être accessible de l'extérieur.

Selon une autre particularité, l'organe saillant est composé d'un pointeau métallique fixé sur le corps de l'embout et se dressant en saillance de sa paroi interne.

Selon une autre particularité, la première partie des moyens de connexion électrique comporte une première pièce annulaire et la deuxième partie des moyens de connexion électrique comporte une deuxième pièce annulaire, le pointeau métallique étant agencé pour réaliser une liaison électrique entre la première pièce annulaire et la deuxième pièce annulaire.

Selon une autre particularité, le corps de l'embout comporte une chemise présentant une paroi interne sur laquelle se dresse ledit organe saillant.

Selon une autre particularité, l'embout est configuré pour être enfoncé en force sur une extrémité de ladite cellule.

Selon une autre particularité, le dispositif comporte des moyens de fixation de type mâle-femelle agencés pour coopérer avec des moyens de fixation complémentaires d'un dispositif identique adjacent.

L'invention concerne également l'utilisation du dispositif tel que défini ci-dessus sur une cellule électrochimique, ladite cellule présentant une forme allongée suivant un axe entre deux extrémités et deux parois transversales opposées et une paroi latérale, ledit dispositif étant adapté sur l'une de ses extrémités pour creuser un sillon sur une paroi transversale de la cellule ou sur sa paroi latérale.

Selon une particularité, la cellule présente une forme cylindrique de révolution.

Selon une autre particularité, la cellule est réalisée selon la norme 18650 ou 21700.

### Brève description des figures

D'autres caractéristiques et avantages vont apparaître dans la description détaillée qui suit faite en regard des figures annexées listées ci-dessous :
- La figure 1 représente de manière schématique une cellule au lithium de type 18650 ou 21700 ;
- Les figures 2A et 2B représentent respectivement, vus en perspective, un dispositif interrupteur de courant et un évent, classiquement employés dans une batterie au lithium telle que représentée sur la figure 1 ;
- La figure 3 illustre le principe de réalisation de l'invention en montrant, en vue schématique, une cellule telle que celle de la figure 1 sur laquelle peut être adapté le dispositif de l'invention ;
- La figure 4 montre, la cellule en vue de dessus, sur laquelle a été réalisé un sillon formant une nouvelle amorce de rupture ;
- Les figures 5 et 6 montrent un exemple de réalisation du dispositif de l'invention ;
- La figure 7 montre, de manière schématique, un autre exemple de réalisation du dispositif de l'invention destiné à être adapté sur une cellule ;
- La figure 8 illustre, par une vue de dessus, le principe de juxtaposition et d'interconnexion de cellules, munies chacune d'un dispositif conforme à l'invention.

### Description détaillée d'au moins un mode de réalisation

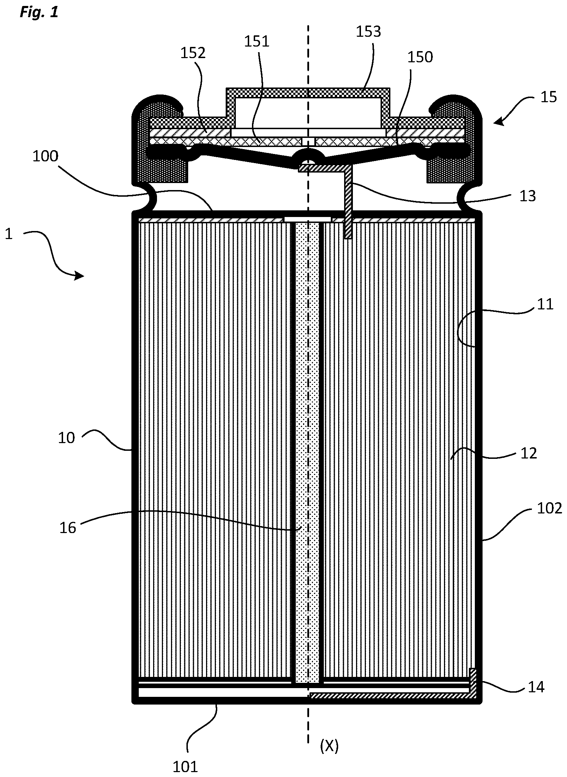

Dans la suite de la description, les termes "haut", "bas", "inférieur", "supérieur", "au-dessus", "au-dessous" sont à comprendre en se référant à l'axe (X) vertical représenté sur la figure 1.

Le dispositif de l'invention est notamment parfait pour s'adapter sur une cellule secondaire électrochimique au lithium, plus connue sous la référence cellule 18650 ou 21700.

Le dispositif de l'invention est décrit principalement pour une cellule de forme cylindrique de révolution, par exemple de type 18650 ou 21700, mais il faut comprendre qu'il peut s'adapter sur une cellule présentant une forme externe différente, notamment de type prismatique, son principe étant reproductible quelle que soit la forme de la cellule.

En référence à la figure 1, une cellule secondaire au lithium classique de type 18650 ou 21700 présente une forme cylindrique à base circulaire, développée autour de l'axe (X). Une telle cellule est décrite dans le brevet US8323825B2 déjà cité ci-dessus.

Une telle cellule 1 au lithium comporte principalement un conteneur, appelé généralement godet 10, de forme cylindrique, présentant une paroi supérieure 100 portant le pôle positif, une paroi inférieure 101 portant le pôle négatif et une paroi latérale 102. Ce godet 10 définit un volume interne 11 dans lequel sont placées les deux électrodes 12 (représentées par un unique ensemble sur la figure 1). Les deux électrodes 12 sont réalisées de part et d'autre d'une plaque isolante souple enroulée pour former un ensemble cylindrique venant se loger dans le godet 10. Un électrolyte est ensuite injecté dans le volume interne 11 du godet. Un insert central 16 peut être inséré axialement dans le godet 10. La cellule comporte deux pattes de connexion 13, 14 reliées chacune à une électrode distincte. Sur sa partie supérieure, le godet 10 est refermé de manière hermétique par un capuchon 15. Ce capuchon 15 porte un empilement situé à l'intérieur du godet 10 et formé d'un évent 150, d'un dispositif interrupteur de courant 151, éventuellement d'une thermistance 152 de type CTP (à coefficient de température positif), et d'un capot 153 externe formant une première borne électrique de connexion de la cellule.

Le dispositif interrupteur de courant 151 est actionné par l'évent 150 lorsque la pression des gaz présents à l'intérieur du godet 10 devient trop importante. Dans cette situation de pression excessive, l'évent 150 se déforme jusqu'à venir rompre le dispositif interrupteur de courant 151 situé au-dessus, entraînant alors l'interruption du courant électrique fourni. Si la pression des gaz présents à l'intérieur du godet continue d'augmenter, l'évent 150 peut se déformer jusqu'à sa rupture, de manière à permettre une libération des gaz vers l'extérieur.

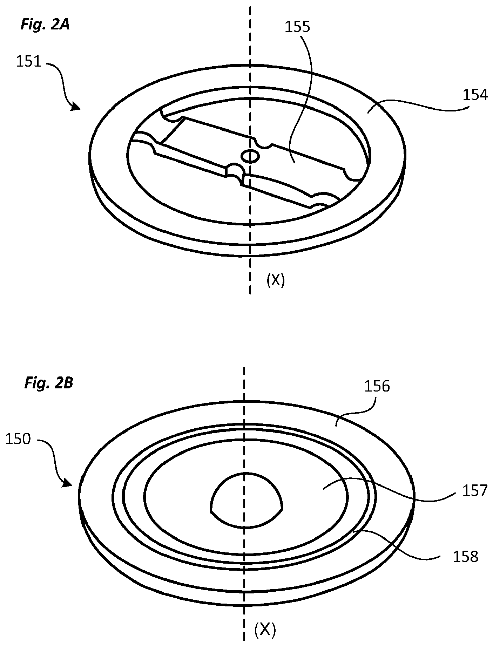

En référence à la figure 2A, de manière non limitative, le dispositif d'interruption de courant 151 peut se présenter sous la forme d'un anneau 154 coaxial avec l'axe (X), comprenant un pont 155 diamétral par lequel circule le courant électrique. Ce pont 155 est susceptible de rompre lorsque la pression dans le godet dépasse un certain seuil, interrompant alors le courant électrique dans la cellule.

Comme représenté sur la figure 2B, de manière non limitative, l'évent peut se présenter sous la forme d'un disque 156 coaxial avec l'axe (X) et comportant un profil bombé 157 formant une concavité vers l'intérieur de la cellule. Sous l'effet de la pression, ce profil bombé se déforme pour former un profil convexe vers l'extérieur, et lorsque la pression dépasse un certain seuil, l'évent se rompt sous l'effet de la pression des gaz. L'évent peut comporter une saignée 158 annulaire formant une amorce de rupture.

La cellule comporte deux extrémités opposées, l'une portant le pôle positif et l'autre portant le pôle négatif.

L'évent de surpression principal est généralement placé du côté du pôle positif de la cellule.

Le dispositif de l'invention permet de créer une nouvelle amorce de rupture sur la cellule 1 et ainsi un évent de surpression supplémentaire. Il permet donc d'adapter la cellule 1 à des contraintes plus élevées et d'évacuer les gaz de réaction, sans exploser.

Le dispositif de l'invention vient se fixer sur une cellule 1 existante et comporte au moins un organe saillant permettant de creuser un sillon sur la paroi de la cellule 1 pour former une nouvelle amorce de rupture. Le sillon peut être adapté en longueur et en profondeur selon la pression de tarage souhaitée. On verra que le sillon peut par exemple être creusé sur la paroi inférieure 101 ou supérieure 100 de la cellule ou sur sa paroi latérale 102.

Selon un aspect particulier de l'invention, il faut noter que le dispositif est destiné à être fixé en permanence sur la cellule, et peut venir se substituer aux entretoises présentes classiquement lorsque plusieurs cellules sont rassemblées dans un pack et interconnectées entre elles via des moyens de liaison électrique de type clinquant.

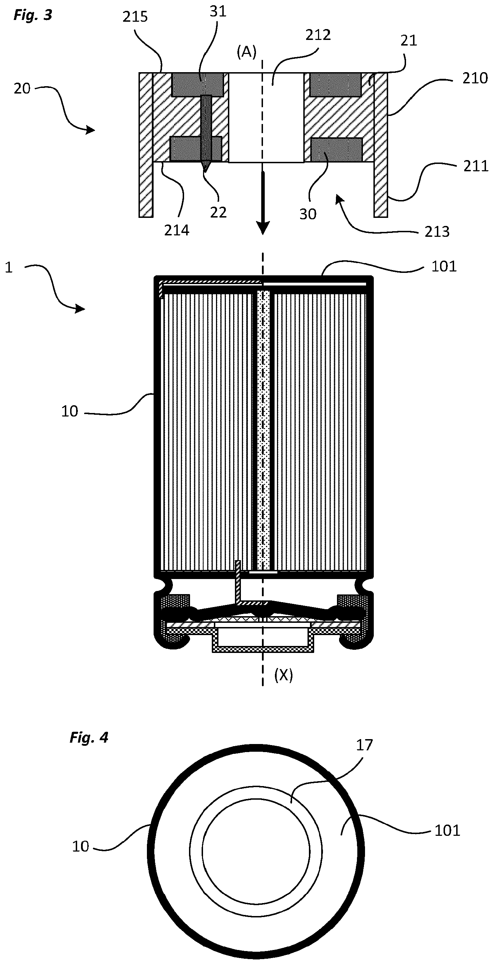

Le dispositif est décrit ci-dessous en liaison avec les figures 3 à 8.

Le dispositif se présente sous la forme d'un embout 20 destiné à venir s'adapter sur une extrémité de la cellule, avantageusement du côté du pôle de la cellule 1 qui ne comporte pas déjà un évent de surpression.

L'embout 20 présente un axe central (A) suivant lequel il vient se positionner de manière coaxiale à l'axe (X) de la cellule.

L'embout peut comporter des moyens de fixation agencé pour assurer sa fixation sur la cellule. Ces moyens de fixation peuvent être formés par simple friction mécanique entre l'embout et la cellule.

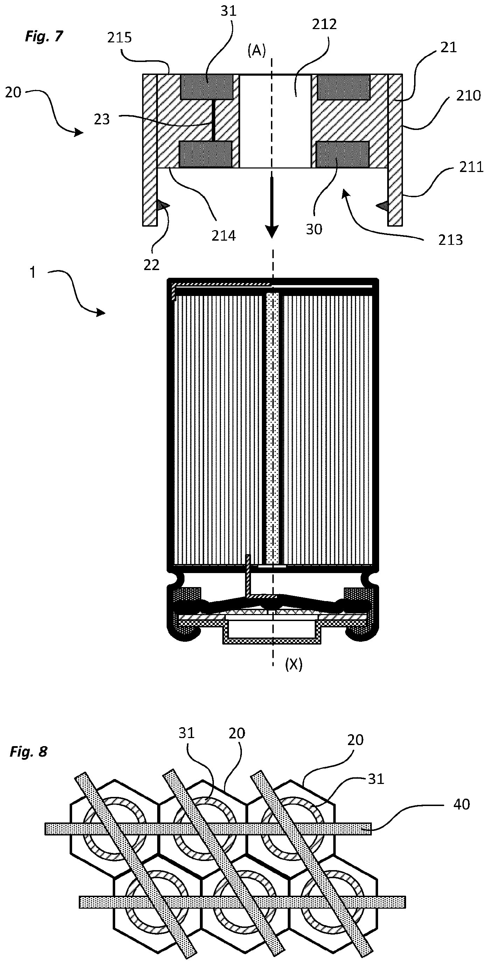

L'embout 20 peut présenter une section transversale externe constante, par exemple carrée ou hexagonale. Elle peut être choisie pour faciliter la juxtaposition de plusieurs cellules lors de la réalisation d'un pack batterie. La figure 8 illustre le principe de juxtaposition de plusieurs cellules, facilitée par l'emploi de dispositifs de l'invention de section externe hexagonale.

L'embout 20 comporte un corps 21 délimitant un volume interne 213 ouvert sur l'extérieur et dans lequel vient s'enfoncer l'extrémité de la cellule 1. Le corps 21 de l'embout comporte une paroi externe 215 et une paroi interne 214.

L'embout 20 peut présenter une forme d'écrou ou de capuchon, sans filetage interne, venant s'adapter sur l'extrémité de la cellule 1.

Le volume interne 213 du corps de l'embout 20 définit une empreinte destinée à coopérer avec l'extrémité de la cellule, de section cylindrique.

L'embout 20 est avantageusement destiné à être positionné sur l'extrémité de la cellule qui ne comporte pas l'évent de surpression principal, pour permettre d'en créer un nouveau.

Il faut noter que l'embout 20 est destiné à être maintenu et à demeurer sur la tête de la cellule et qu'il n'est pas employé de manière temporaire à la création du nouvel évent de surpression.

Le corps 21 de l'embout est réalisé dans un matériau isolant de l'électricité, par exemple en plastique ou équivalent.

En référence à la figure 3, de manière non limitative, le corps 21 de l'embout peut comporter une partie haute 210 destinée à venir recouvrir la tête de la cellule 1 et une partie basse 211, prolongeant la partie haute 210 et formant une chemise destinée à s'étendre le long de paroi latérale 102 de la cellule, sur une partie de sa hauteur. La partie haute 210 peut comporter un trou axial 212.

Selon un aspect particulier de l'invention, l'organe saillant employé pour former la nouvelle amorce de rupture peut comporter au moins un pointeau 22 métallique, agencé pour que sa tête contondante émerge par rapport à une surface de la paroi interne 214 du corps de l'embout.

Par rotation de l'embout 20 sur la tête de la cellule 1 ou de la cellule par rapport à l'embout, le pointeau 22 est amené à créer un sillon sur une paroi du godet 10. La figure 4 montre le sillon 17 creusé sur la paroi inférieure 101 du godet 10 de la cellule 1.

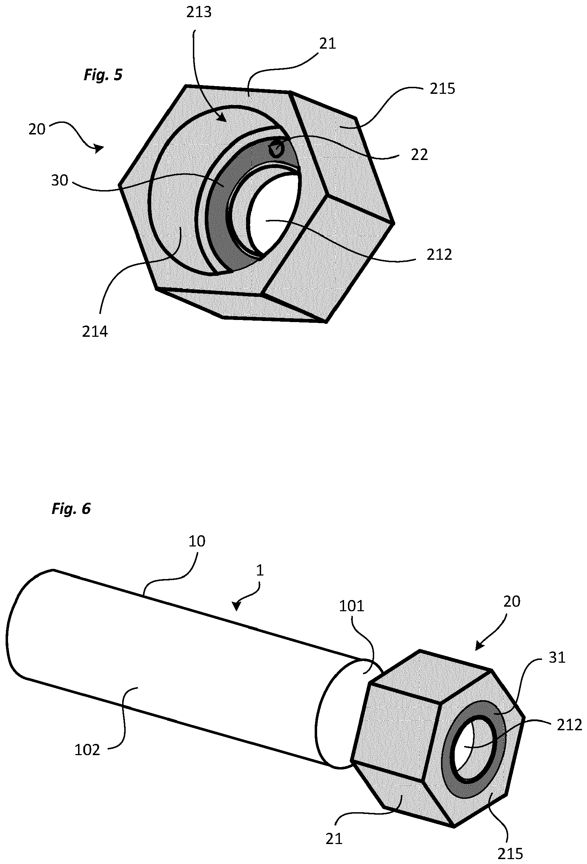

De manière non limitative, sur les figures 3 et 5, le pointeau 22 est orienté suivant un axe parallèle à l'axe (A) de l'embout 20, et est avantageusement désaxé par rapport à celui-ci. Le pointeau 22 vient ainsi avantageusement en appui contre une paroi transversale (ici la paroi inférieure 101) du godet de la cellule. Il peut être intégré à la partie haute 210 du corps 21 de l'embout.

Selon une variante de réalisation représentée sur la figure 7, le pointeau 22 peut être orienté vers l'intérieur du volume interne 213 de l'embout, suivant une direction radiale. Le pointeau 22 est ainsi agencé pour venir creuser un sillon sur la paroi latérale du godet 10 de la cellule 1 lorsque l'embout 20 est adapté sur l'extrémité de la cellule. Dans cette variante, le pointeau 22 est intégré à la partie basse 211 du corps 21 de l'embout.

Selon cette variante de réalisation, l'embout 20 peut être enfoncé en force sur la cellule 1, permettant de creuser le sillon lors de l'insertion de l'embout.

Le corps 20 de l'embout 21 intègre avantageusement des moyens de connexion électrique agencés pour venir en contact avec le pôle électrique de la cellule (par exemple le pôle négatif).

Les moyens de connexion électrique sont réalisés dans un matériau conducteur de l'électricité.

Les moyens de connexion électrique peuvent comporter une première partie, dite interne, agencée dans le volume interne de l'embout, par exemple intégrée au corps 21 et destinée à venir en contact avec le pôle électrique de la cellule 1. Cette première partie peut être formée d'une première pièce annulaire 30 intégrée au corps 21 de l'embout et ayant une face affleurante à sa paroi interne 214.

Les moyens de connexion peuvent comporter une deuxième partie, dite externe, intégrée au corps 21 de l'embout 20 et accessible sur sa paroi externe 215. Cette deuxième partie est en contact électrique avec la première partie et permet de venir se connecter au pôle électrique de la cellule depuis l'extérieur de l'embout 20 lorsque celui-ci est adapté sur la cellule. Comme la première partie, il peut s'agir d'une deuxième pièce annulaire 31 présentant une face affleurante à la paroi externe du corps de l'embout.

La partie interne et la partie externe des moyens de connexion électrique peuvent être encastrées dans la partie haute du corps de l'embout. Les deux pièces annulaires peuvent être identiques et agencées en vis-à-vis l'une de l'autre. Elles peuvent être agencés en périphérie du trou axial 212 réalisé à travers la partie haute 210 du corps 21 de l'embout 20.

Pour réaliser la continuité électrique entre la partie interne et la partie externe, comme illustré par la figure 3, le dispositif peut utiliser le pointeau 22 métallique intégré également au corps de l'embout. Toute autre solution de remplacement ou de complément peut également être envisagée. Dans la variante à pointeau radial de la figure 7, la continuité électrique est réalisée grâce à un conducteur électrique 23 adapté.

Selon une particularité, le clinquant permettant d'interconnecter la cellule avec d'autres cellules adjacentes est rapporté sur la paroi externe de l'embout, et est agencé pour venir en contact avec la partie externe des moyens de connexion électrique de l'embout.

Il faut noter que le dispositif peut comporter plusieurs pointeaux, agencés parallèlement à l'axe de l'embout, permettant notamment de passer un courant plus élevé. Ils peuvent alors être positionnés suivant plusieurs axes décalés radialement, de manière à creuser plusieurs sillons concentriques.

Le dispositif peut également comporter plusieurs pointeaux, agencés de manière transversale, suivant plusieurs directions radiales. Dans cette configuration, ils permettent de creuser plusieurs sillons parallèles sur la paroi latérale du godet de la cellule.

Il faut noter que le pointeau 22 peut être réglable, selon la variante envisagée, en hauteur ou radialement, permettant ainsi de régler la profondeur du sillon creusé et donc la pression de rupture de l'amorce. Le pointeau peut être fileté et amené à coopérer avec un taraudage réalisé à travers le corps de l'embout.

La figure 8 montre plusieurs dispositifs conformes à l'invention, présentant chacun une section transversale hexagonale. Les cellules 1 sont juxtaposées et surmontées chacune d'un dispositif conforme à l'invention. Grâce à la forme hexagonale des dispositifs, les cellules sont agencées en quinconce, interconnectées par des clinquants 40 fixés sur la face supérieure des dispositifs. Des moyens de fixation de type mâle-femelle peuvent être agencés sur chaque dispositif pour fixer les dispositifs entre eux. Ces moyens peuvent être des moyens de clipsage agencés sur les parois latérales de chaque dispositif.

Le dispositif de l'invention présente ainsi de nombreux avantages, parmi lesquels :
- Il s'adapte facilement sur les cellules existantes ;
- Il permet de régler facilement la pression d'expulsion en jouant sur la profondeur et/ou la longueur du sillon ;
- Il est facile à fabriquer ;
- Il permet de remplacer les entretoises utilisées classiquement pour réunir plusieurs cellules au sein d'un pack batterie, tout en offrant des fonctionnalités supplémentaires ;

## Revendications

1. Dispositif adaptable sur une cellule (1) électrochimique qui comporte un godet, pour créer une amorce de rupture sur une paroi du godet (10) de ladite cellule (1), **caractérisé en ce qu'**il comporte des moyens de fixation au godet de ladite cellule, un organe saillant agencé pour creuser un sillon (17) sur la paroi du godet de ladite cellule, ledit sillon étant destiné à former ladite amorce de rupture.

2. Dispositif selon la revendication 1, **caractérisé en ce qu'**il se présente sous la forme d'un embout (20) adaptable sur le godet (10) de la cellule (1), ledit embout comportant un corps (21) délimitant un volume interne (213) comportant une empreinte formée pour coopérer avec une forme complémentaire de la cellule, ledit corps (21) comprenant une paroi interne (214) et une paroi externe (215).

3. Dispositif selon la revendication 2, **caractérisé en ce qu'**il comporte des moyens de connexion électrique intégrés audit corps (21) de l'embout, lesdits moyens de connexion électrique comportant une première partie fixée sur la paroi interne (214) du corps et destinée à venir en contact avec un pôle électrique de ladite cellule et une deuxième partie fixée sur sa paroi externe (215) et configurée pour être accessible de l'extérieur.

4. Dispositif selon la revendication 3, **caractérisé en ce que** l'organe saillant est composé d'un pointeau (22) métallique fixé sur le corps (21) de l'embout (20) et se dressant en saillance de sa paroi interne (214).

5. Dispositif selon la revendication 4, **caractérisé en ce que** la première partie des moyens de connexion électrique comporte une première pièce annulaire (30) et la deuxième partie des moyens de connexion électrique comporte une deuxième pièce annulaire (31) et **en ce que** le pointeau (22) métallique est agencé pour réaliser une liaison électrique entre la première pièce annulaire (30) et la deuxième pièce annulaire (31).

6. Dispositif selon la revendication 2 ou 3, **caractérisé en ce que** le corps (21) de l'embout (20) comporte une chemise définissant la paroi interne sur laquelle se dresse ledit organe saillant.

7. Dispositif selon l'une des revendications 1 à 6, **caractérisé en ce qu'**il comporte des moyens de fixation de type mâle-femelle agencés pour coopérer avec des moyens de fixation complémentaires d'un dispositif identique adjacent.

8. Utilisation du dispositif tel que défini dans l'une des revendications 1 à 5 sur une cellule (1) électrochimique, ladite cellule (1) présentant une forme allongée suivant un axe (X) entre deux extrémités et deux parois (100, 101) transversales opposées et une paroi latérale (102), ledit dispositif étant adapté sur l'une de ses extrémités pour creuser un sillon (17) sur une paroi transversale de la cellule.

9. Utilisation du dispositif tel que défini dans la revendication 6 sur une cellule (1) électrochimique, ladite cellule (1) présentant une forme allongée suivant un axe (X) entre deux extrémités et deux parois (100, 101) transversales opposées et une paroi latérale (102), ledit dispositif étant adapté sur l'une de ses extrémités pour creuser un sillon (17) sur une paroi latérale de la cellule.

10. Utilisation selon la revendication 9, **caractérisée en ce que** la cellule (1) présente une forme cylindrique de révolution.
